# EUROPÄISCHE PATENTSCHRIFT

(11) **EP 1 109 840 B1**
(45) Veröffentlichungstag und Bekanntmachung des Hinweises auf die Patenterteilung: **26.11.2003**
(21) Anmeldenummer: 99941515.1
(22) Anmeldetag: 04.08.1999
(51) Int. Cl.: C08F 6/08

(54) **VERFAHREN ZUR ENTFERNUNG VON INITIATOREN AUS PFROPFPRODUKTEN**
METHOD FOR REMOVING INITIATORS FROM GRAFTING PRODUCTS
PROCEDE PERMETTANT D'ELIMINER LES INITIATEURS DE PRODUITS GREFFES

(30) Priorität: 14.08.1998 DE 19837020
(43) Veröffentlichungstag der Anmeldung: 27.06.2001
(73) Patentinhaber: MERCK PATENT GmbH, 64271 Darmstadt (DE)
(72) Erfinder: BRITSCH, Lothar, D-79276 Reute (DE); MÜLLER, Egbert, D-64291 Darmstadt (DE); STÖHR, Josef-Stefan, D-64569 Nauheim (DE)
(86) Internationale Anmeldenummer: EP9905634
(87) Internationale Veröffentlichungsnummer: WO00009574

(56) Entgegenhaltungen:
- EP-A- 0 565 978
- US-A- 4 279 791

## Beschreibung

Die Erfindung betrifft ein verbessertes Verfahren zur Entfernung von Initiatoren aus Pfropfprodukten, bei denen die Pfropfung mittels Cer-(IV)-Salzen initiiert wurde.

Die Pfropfung von ungesättigten Verbindungen auf hydroxylgruppenhaltigen Basisträgem, wie sie in DE 38 11 042 und DE 43 10 964 und den dazu korrespondierenden Druckschriften EP 0 337 144 und EP 0 565 978 offenbart wird, beruht auf dem Verfahren von Mino und Kaizerman (1958). Dabei wird die Pfropfung durch Cer-(IV)-Salze initiiert.

Für die Entfernung von Cer-Salzen aus dem Pfropfprodukt ist das Auswaschen des Pfropfproduktes mit 0,5 M Schwefelsäure, sowie das Auswaschen mit saurer Natriumsulfitlösung (0,25 M Lösung von Natriumsulfit in 0,25 M Schwefelsäure) bekannt. Dieser Vorgang muß aber in vielen Fällen mehrfach wiederholt werden, damit die Cer-Salze hinreichend aus dem Produkt entfernt werden. Es zeigte sich, daß für Kationenaustauscher, wie z.B. Pfropfpolymerisaten auf der Grundlage von Acrylamidomethylpropansulfonsäure, dieses Verfahren unzureichend ist. Das Arbeiten mit saurer Sulfitlösung ist aus Gründen des Arbeitsschutzes unvorteilhaft. Für andere Pfropfpolymerisate, die beispielsweise Epoxygruppen enhalten, ist das wiederholte Auswaschen mit der starken Mineralsäure nachteilig, weil ein deutlicher Anteil der Epoxygruppen dabei hydrolysiert werden, oder weil die Sulfitionen mit den Epoxygruppen reagieren. Dadurch verbleibt bei einigen Pfropfprodukten, insbesondere solchen, die Epoxygruppen enthalten, noch ein meßbarer Rückstand (typischerweise ca. 200 ppm Cer) an Cersalzen im Produkt. Insbesondere soweit die mittels Pfropfung hergestellten Trennmaterialien in der Biotechnologie oder zur Herstellung von pharmazeutischen Produkten Verwendung finden, ist eine Entfernung von Cersalzen bis unter die Nachweisgrenze der Atomabsorptionsspektroskopie (10 ppm) eine wesentliche Eigenschaft.

Es besteht also die Aufgabe, aus Pfropfprodukten, die mittels Cer-(IV)-Initiierung erhalten wurden, Cersalze zu entfernen, so daß weniger als 100 ppm Cer im Produkt verbleiben.

Es wurde gefunden, daß Cersalze aus den Pfropfprodukten vollständiger entfernt werden können, wenn man eine mineralsaure Lösung von Ascorbinsäure zum Auswaschen verwendet.

Gegenstand der Erfindung sind Verfahren zur Entfernung von Initiatoren aus Pfropfprodukten, bei denen die Pfropfung mittels Cer-(IV)-Salzen initiiert wurde, durch Auswaschen mit einer mineralsauren Lösung, wobei dieser Lösung Ascorbinsäure zugesetzt wird.

Außer in den bereits genannten Druckschriften werden Trennmaterialien auf der Grundlage von Pfropfpolymerisaten, bei denen die Pfropfung mit Cer-(IV)-Salzen initiiert wird, in einer Reihe weiterer Druckschriften offenbart: EP 0 697 905, EP 0 708 919, EP 0 721 372, EP 0 722 360, EP 0 722 361, EP 0 722 362, EP 0 789 620 und PCT/EP 98/01 880.

Erfindungsgemäß werden die Trennmaterialien, aus denen Cerionen ausgewaschen werden sollen, mit einer mineralsauren Lösung von Ascorbinsäure behandelt; Bevorzugterweise beträgt die Konzentration an Ascorbinsäure 0,01 bis 2 Mol/l, besonders bevorzugt 0,1 bis 0,5 Mol/l, die der Mineralsäure 0,01 bis 2 Mol/l, besonders bevorzugt 0,1 bis 0,5 Mol/l. Als Mineralsäuren werden Perchlorsäure und insbesondere Schwefelsäure bevorzugt. Der Waschvorgang erfolgt typischerweise bei 4 °C bis 80 °C, bevorzugterweise bei 15 °C bis 30 °C, nach üblichen Verfahren, beispielsweise unter Verwendung einer Nutsche oder durch Sedimentieren und Dekantieren. Es wird typischerweise mit 3 bis 10, meist 4 bis 5, Bettvolumina der Lösung gewaschen.

Die Konzentrationen der Cersalze werden mittels optischer Emissionsspektrometrie mit einem handelsüblichen ICP-Spektrometer bestimmt. Der Gewichtsanteil Cer wird aufgrund der Kalibierung mit Cersalzen gemessen und als Gewichtsanteil Cer bezogen auf das Gewicht des getrockneten Trennmaterials üblicherweise in ppm (parts per million) angegeben. Das Trennmaterial wird für die Analyse nach üblichen Verfahren getrocknet, so daß es einen Wassergehalt bestimmt nach Karl-Fischer von weniger als 0,1 Gewichts-Prozent aufweist. Einzelheiten der Cerbestimmung finden sich in Beispiel 1. Mit dem erfindungsgemäßen Verfahren werden Trennmaterialien erhalten, die zwischen 1 und 10 ppm, üblicherweise unter 1 ppm, Cer enthalten.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die vollständige Offenbarung aller vor- und nachstehend aufgeführten Anmeldungen, Patente und Veröffentlichungen, insbesondere die der korrspondierenden Anmeldung DE 198 37 020.2, eingereicht am 14.08.1998, sind durch Bezugnahme in diese Anmeldung eingeführt.

### Beispiele

### Beispiel 1

100 ml eines Pfropfpolymerisates auf der Grundlage von Fractogel®, (Merck KGaA, Darmstadt, DE) enthaltend 2-Acrylamido-2-methylpropansulfonsäure als Monomereinheiten, hergestellt nach EP 0 337 144, werden auf einer Nutsche mit vier Bettvolumen einer Lösung von 0,25 M Ascorbinsäure in 0,25 M Schwefelsäure gewaschen.

Ein Aliquot (ca. 5 - 10 g) des Trennmaterials wird getrocknet, bis der Wassergehalt nach Karl-Fischer weniger als 0,1 Gewichts-% beträgt. Anschließend wird das Gewicht des getrockneten Trennmaterials bestimmt. Das Trennmaterial wird in ein 100 ml Becherglas überführt und mit 20 ml einer Mischung (1:1) aus HNO₃ (65 Gew.-%; Art.Nr. 441 Merck KGaA, DE) und H₂SO₄ (96 Gew.-%; Art.Nr. 714, Merck KGaA, DE) erhitzt. In der Hitze wird tropfenweise H₂O₂ (30 Gew.-%; p.A.; Art.Nr. 7209, Merck KGaA, DE) zugefügt, bis die Suspension entfärbt ist. Nach dem Erkalten auf Raumtemperatur (15 - 30 °C) wird die Suspension auf 25 ml mit Wasser aufgefüllt. Für die Kalibrierlösung werden 0,5 ml einer Cer-Standardlösung (1 g/l; Art.Nr. 2612; Merck KGaA, DE) mit 20 ml der obigen Mischung aus HNO₃ und H₂SO₄ wie für die Meßlösung beschrieben behandelt und auf 25 ml aufgefüllt. Als Blindwert dient eine Mischung bestehend aus 20 ml HNO₃ und H₂SO₄, die mit Wasser auf 25 ml aufgefüllt wird.

Die ICP-Messung wird folgendermaßen ausgeführt:

| | |
|---|---|
| Gerät | Perkin-Elmer Optima 3000 DV; |
| Zerstäuber | Cross Flow; |
| Probeneintrag | 1 ml/min; |
| Plasmaleistung | 1500 Watt; |
| Plasmagas | 15 l/min; |
| Hilfsgas | 0,5 l/min; |
| Zerstäubergas | 0,75 l/min; |
| Beobachtungsmodus | axial; |
| Emissionslinie | 413,755 nm. |

Die für die Meßlösung gemessene Konzentration wird mit Hilfe der Probeneinwaage auf das Gewichtsverhältnis ppm umgerechnet. Die Nachweisgrenze der Methodik liegt bei 10 ppm Cer.

Der mittels Atomabsorptionsspektrometrie gemessene Gehalt an Cersalzen liegt unter der Nachweisgrenze (10 ppm Cer).

### Beispiel 2:

100 ml epoxygruppenhaltiges Pfropfpolymerisat auf der Grundlage von Fractogel®, hergestellt nach EP 0 565 978, werden auf einer Nutsche mit vier Bettvolumen einer Lösung von 0,25 M Ascorbinsäure in 0,25 M Schwefelsäure gewaschen.

Der mittels Atomabsorptionsspektrometrie gemessene Gehalt an Cersalzen liegt unter der Nachweisgrenze (10 ppm).

### Vergleichsbeispiel

100 ml epoxygruppenhaltiges Pfropfpolymerisat auf der Grundlage von Fractogel®, hergestellt nach EP 0 565 978, werden auf einer Nutsche mit zehn Bettvolumen 0,5 M Schwefelsäure gewaschen.

Der mittels Atomabsorptionsspektrometrie gemessene Gehalt an Cersalzen beträgt 237 ppm.

## Patentansprüche

1. Verfahren zur Entfernung von Initiatoren aus Pfropfprodukten, bei denen die Pfropfung mittels Cer-(IV)-Salzen initiiert wurde, durch Auswaschen mit einer mineralsauren Lösung, **dadurch gekennzeichnet, daß** dieser Lösung Ascorbinsäure zugesetzt wird.

2. Verfahren nach Anspruch 1, **dadurch gekennzeichnet, daß** die Konzentration der Ascorbinsäure 0,01 bis 2 M beträgt.

## Claims

1. Process for the removal of initiators from graft products in which the grafting was initiated by means of cerium(IV) salts, by washing with a mineral acid solution, **characterized in that** ascorbic acid is added to this solution.

2. Process according to Claim 1, **characterized in that** the concentration of the ascorbic acid is 0.01 to 2 M.

## Revendications

1. Procédé permettant d'éliminer les amorceurs des produits greffés, dans lesquels le greffage a été initié à l'aide de sels Cer(IV), par lavage avec une solution d'acide minéral, **caractérisé en ce qu'**à cette solution est ajouté de l'acide ascorbique.

2. Procédé selon la revendication 1, **caractérisé en ce que** la concentration en acide ascorbique s'élève de 0,01 à 2 M.
